# EUROPÄISCHE PATENTSCHRIFT

(11) **EP 1 331 789 B1**
(45) Veröffentlichungstag und Bekanntmachung des Hinweises auf die Patenterteilung: **27.06.2007**
(21) Anmeldenummer: 03000475.8
(22) Anmeldetag: 11.01.2003
(51) Int. Cl.: H04L 12/24, H04L 29/12, G06F 3/12, G06F 9/445

(54) **Zentrale Konfigurierung von aktiven Geräten im Netz**
Central configuration of active devices in a network
Configuration centrale des appareils actifs dans un réseau

(30) Priorität: 28.01.2002 DE 10203403
(43) Veröffentlichungstag der Anmeldung: 30.07.2003
(73) Patentinhaber: Wincor Nixdorf International GmbH, 33106 Paderborn (DE)
(72) Erfinder: Ettler, Heinrich, 33154 Salzkotten (DE); Miksic, Miran, 33104 Paderborn (DE)

(56) Entgegenhaltungen:
- WO-A-01/86486
- DE-A- 19 743 324
- US-A- 5 580 177
- US-A- 5 625 757
- US-A- 5 960 167
- SUN MICROSYSTEMS: "JINI ARCHITECTURAL OVERVIEW" INTERNET CITATION, 1999, XP002217546 Gefunden im Internet: <URL:http://www.sun.com/software/jini/whit epapers/architecture.pdf>

## Beschreibung

Die Erfindung betrifft ein Verfahren zum zentralen Konfigurierung von netzaktiven Geräten, insbesondere von Peripheriegeräten bei Arbeitsplätzen im Bankbereich.

Mit der Einführung von DV-Arbeitsplätzen in Banken wurde zunächst eine zentrale Lösung verwendet, bei der in einem 'host' genannten Zentralrecher die komplette Steuerung der Anwendung erfolgt. Am Arbeitsplatz sind nur isolierte Geräte wie Bildschirm, Tastatur und Drucker vorhanden, die über einen Multiplex-Kanal von der Anwendung im Zentralrechner angesprochen werden. Im Zentralrechner ist die Zuordnung der Geräte zueinander in einer Datenbank gespeichert. Hier sind alle Konfigurationsdaten zentral verfügbar und einheitlich änderbar.

Durch die Fortschritte der Rechnertechnologie konnten die Arbeitsplätze mit immer leistungsfähigeren Mikroprozessoren ausgestattet werden, so daß ein immer größerer Teil der Steuerung durch einen Arbeitsplatzrechner übernommen werden kann. Insbesondere werden die Peripheriegeräte direkt an den Arbeitsplatz angeschlossen und stehen dann in der Regel dem Arbeitsplatz exklusiv zur Verfügung. Problematisch ist bei dieser Lösung das Konfigurationsmangagement und das Laden bzw. Aktualisieren der Arbeitsplatzrechner. Mehreren Arbeitsplätzen gemeinsame Geräte erfordern einen erheblichen Aufwand, da die Geräte grundsätzlich einem einzelnen Arbeitsplatz zugeordnet sind.

Ein andere Lösung für den Betrieb von Peripheriegeräten in Bankenarbeitsplätzen sieht vor, die Geräte grundsätzlich über eine eigene Netzwerkschnittstelle anzusprechen und in einem zentralen Verzeichnis zu verwalten. Derzeit ist die optimale Lösung hierfür die Verwendung der JINI-Technologie der Fa. Sun Microsystems, USA. JINI umfaßt einen Verzeichnisdienst, mit dem Gerätefunktionen und andere Dienste aufgefunden werden können. Der Verzeichnisdienst liefert dann sowohl die Netzwerkadresse als auch die notwendigen Interface-Beschreibungen; der Aufruf der Geräte und anderen Dienste erfolgt über 'remote method invocation', RMI. Die Auswahl aus der Datenbank verwendet als zusätzliche Kriterien freie Attribute. Die Verwendung der JINI-Technologie ist beispielsweise in der Offenlegungsschrift WO 01/86486 A2 beschrieben.

Dennoch verbleibt auch in dieser Lösung die Aufgabe der Konfiguration der dezentralen Geräte und Dienste. Bislang wird dies erreicht, indem auf dem jeweiligen Rechner Konfigurationsdateien vorhanden sind, die von dem Wartungspersonal nach Bedarf aktualisiert werden. Die in der Offenlegungsschrift DE 19743324 beschriebene Lösung erlaubt zwar die Verwendung von generischen Konfigurationsdateien, löst jedoch nicht das Problem einer gemeinsamen Administration und einfachen Verteilung.

Die Erfindung löst die Aufgabe, ein Verfahren für eine zentrale Konfigurierung für dezentrale netzaktive Geräte anzugeben, indem zwar jede Gerätesteuerung eine lokale Konfigurationsliste hat, diese jedoch über das Netzwerk von einem zentralen Server aus aktualisiert wird.

Es handelt sich also um ein Verfahren zum Betreiben eines Computersystems mit Gerätesteuerungen, die über ein Netzwerk von einem Applikationsserver aus angesprochen werden. Die Gerätesteuerungen werden über eine Konfigurationsliste konfiguriert, deren Einträge über einen Konfigurationsaktualisierer mit denen einer über das Netzwerk erreichbaren zentralen Konfigurationsdatenbank verglichen und gegebenenfalls aktualisiert werden.

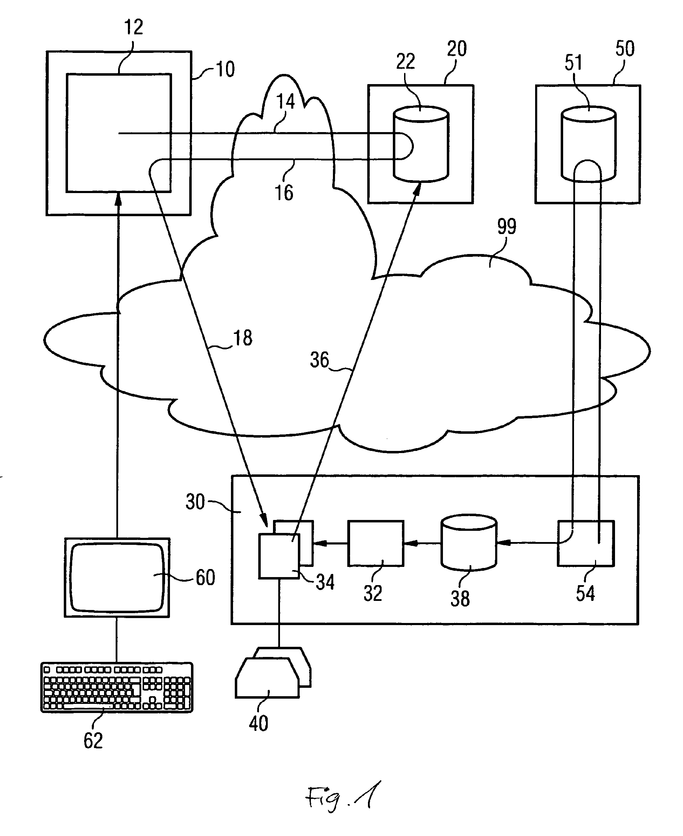

In Fig. 1 ist schematisch eine Konfiguration gezeigt, in der die Erfindung benutzt wird.

Eine Gerätesteuerung 30 stellt den Zugang zu einer Anzahl von Peripheriegeräten 40 über ein Netzwerk 99 bereit. Für jedes Peripheriegerät ist ein Gerätesteuerprozeß 34 vorhanden. Dieser Gerätesteuerprozess kann beispielsweise über die in JAVA realisierte JINI-Technologie der Fa. Sun Microsystems, USA, Interfacedaten und Attribute in eine Datenbank 22 eines Verzeichnisservers 20 eingestellt werden. Ein Anwendungsprogramm 12 auf einem Anwendungsserver 10, gesteuert über einen HTML-Browser mit Bildschirm 60 und Tastatur 62, das eine Ein- oder Ausgabe tätigen möchte, bestimmt über den Verzeichnisserver 20 durch eine Anfrage 14 einen passenden Gerätesteuerprozess 34, erhält eine Antwort 16 mit den in der Datenbank 22 abgelegten Daten und ruft unter Verwendung dieser Daten durch einen Auftrag 18 den Gerätesteuerprozess 34 auf, der die Ein- oder Ausgabe mit dem Gerät 40 abwickelt. Dieses Vorgehen erlaubt es, das Anwendungsprogramm 12 in einem zentralen Anwendungsserver 10 ablaufen zu lassen und dennoch ohne aufwendige Konfigurationsabfragen dezentrale Peripheriegeräte 40 benutzen zu können.

In den Gerätesteuerungen 30 ist eine Konfigurationsliste 38 vorgesehen, mit der die zu startenden Gerätesteuerprozesse 34 bestimmt werden. In dieser Liste sind die angeschlossenen Geräte 40 zusammen mit den im folgenden benötigten Angaben enthalten. Die Konfigurationsliste 38 kann als einfache Textdatei ausgebildet sein oder aus einer Anzahl von Einträgen in anderen Konfigurationsdatenbanken, z.B. der Windows Registry, bestehen.

Für jeden nicht gesperrten Eintrag in der Konfigurationsliste 38 wird ein dort spezifizierter Gerätesteuerprozeß 34 durch einen Gerätestarter 32 erzeugt. Der Gerätesteuerprozeß 34 bekommt die notwendigen Parameter direkt oder über einen Verweis auf den Eintrag in der Konfigurationsliste 38. Die notwendigen Parameter enthalten insbesondere Adresse und Eigenschaften des zugehörigen Geräts 40.

Die Aktualisierung der Konfigurationsdatei 38 wird erreicht, indem ein über das Netzwerk 99 erreichbarer Konfigurationsserver 50 mit einer Konfigurationsdatenbank angesprochen wird. Hierzu dient ein Konfigurationsklient 54, der in der Gerätesteuerung 30 aktiviert wird. Ob dieser zu Beginn, d.h. vor der Aktivierung des Gerätstarters 32, als Teil desselben, oder unabhängig davon abläuft, ist unerheblich. Gegebenenfalls muss der Konfigurationsklient diejenigen Gerätesteuerprozesse 34, deren Parameter verändert wurden, anhalten und neu starten oder dies auf den nächsten Neustart verschieben. Bevorzugt enthält daher die Konfigurationsliste eine Spalte, in der angegeben wird, ob bei Veränderungen ein sofortiger Neustart erfolgen soll oder die Änderungen erst nach einem Neustart wirksam werden sollen.

Für das Zusammenspiel von Konfigurationsklient 54 und Konfigurationsserver 50 sind eine Anzahl von Varianten mit jeweils spezifischen Vor- und Nachteilen möglich, die im folgenden beschrieben werden.

Eine der einfachen Lösungen legt die Konfigurationsliste 38 als Datei ab und fragt den Konfigurationsserver 50 über HTTP unter Verwendung des Headers 'if-modified-since' (siehe hierzu auch die HTTP-Protokollspezifikation RFC 2216) ab, indem die Bezeichnung der Gerätesteuerung 30 in der URL codiert wird:
http://config.wincor-nixdorf.com/de/nrw/dev_ct130.txt

In dem 'if-modified-since'-Header wird das Datum der letzen Veränderung der Konfigurationsliste 38 eingetragen. Im Konfigurationsserver 50 liegt die Datei 'de/nrw/dev_ct130.txt' an vorbestimmter Stelle im Dateibaum. Der Server vergleicht das Datum aus dem Header mit dem Änderungsdatum der genannten Datei und überträgt entweder einen Statuscode, daß die Datei unverändert sei, oder die geänderte Datei. Zweckmäßig werden die so abgerufenen Konfigurationsdateien im Konfigurations-server 50 aus der Konfigurationsdatenbank 51 durch Selektion erzeugt, wenn die Änderungen der Konfigurationsdatenbank konsolidiert sind.

In einer Variante dieser Lösung wird jede Zeile der Konfigurationsliste mit einem Änderungsdatum versehen und einzeln über den genannten Mechanismus per HTTP vom Server abgerufen. Falls ein Aufsplitten der Konfigurationsdatenbank 51 in eine Datei pro Zeile nicht zweckmäßig ist, wird die HTTP-Anfrage im Server durch ein (CGI-) Programm erfüllt, welches Zugriff auf die Datenbank und die Header hat; dies wird gemeinhin als 'non-parsed header' (NPH) Script bezeichnet und ist beispielsweise im APACHE HTTP-Server verfügbar.

Anstelle von HTTP-Headern kann das Änderungsdatum auch als Datenelement mit der GET- oder POST-Methode übergeben und dann von einem CGI-Script ausgewertet werden.

Insbesondere falls keine hinreichend koordinierten Uhrzeiten in den beteiligten Rechnern sichergestellt werden können, wird alternativ oder zusätzlich jeder Eintrag mit einer hinreichend kollisionsfreien Prüfsumme versehen, wie sie aus der Kryptographie bekannt sind. Der Konfigurationsabgleicher sendet dann die Prüfsumme zur Entscheidung, ob geänderte Daten zentral vorliegen. Der übrige Ablauf ist wie bei der Abfrage mit Datum und Uhrzeit zu gestalten.

Anstelle einer HTTP-Schnittstelle zu dem Konfigurationsserver 50 kann auch die JINI-Technologie verwendet werden. Der Konfigurationsserver 50 ist dann ein JINI-Service, der beliebig im Netzwerk verteilt und lokalisiert sein kann. Nach dem in JINI vorgesehenen 'discovery'- und 'lookup'-Prozess steht dann ein Interface zur Verfügung, mit dem für die Zeilen der Konfigurationsliste 38 abgefragt werden kann, ob geänderte Attribute vorliegen. Diese werden dann gegebenenfalls abgerufen und in die Konfigurationsliste eingetragen. In diesem Fall ist die Verwendung von Prüfsummen bevorzugt, da sie in JAVA bereits zur Verfügung stehen und lediglich über den Konfigurationseintrag zu erstrecken sind.

Insbesondere bei der Verwendung von JAVA ist es möglich, als Eintrag in der Konfigurationsliste jeweils ein serialisiertes JAVA-Objekt abzulegen, das dann die Zugriffs-Funktionen auf die Daten umfaßt. Die Programme, die für die Gerätesteuerprozesse 34 gestartet werden, sind dann in einem JAVA-Archiv enthalten, das gegebenfalls gleichfalls von dem Konfigurationsserver nach einem der obigen Verfahren aktualisiert werden kann. Besonders vorteilhaft ist diese Lösung, wenn die die Gerätesteuerprozesse 34 aufgerufenen Programme lediglich Hüllprogramme ('wrapper') für eine standardisierte Schnittstelle zu den Geräten wie J/XFS sind. In diesem Fall können alle verfügbaren Hüllprogramme in einem einzigen JAVA-Archiv untergebracht sein, da sie nur sehr selten gewartet werden müssen. Das Hüllprogramm bekommt notwendige Parameter durch den Eintrag in der Konfigurationsliste. Durch die zentrale Konfigurierbarkeit muß dann lediglich der J/XFS Treiber aufgespielt werden, wenn ein neues J/XFS konformes Gerät angeschlossen wird. Mit dem Eintrag des Geräts und der Parameter und Attribute ist das Gerät netzwerkweit ansprechbar.

## Patentansprüche

1. Verfahren zum Betreiben eines Computersystems mit Gerätesteuerungen (30) für Peripheriegeräte, die von einem Anwendungsserver (10) genutzt werden, sowie einem Konfigurationsserver (50), die alle über ein Netzwerk (99) miteinander verbunden sind, wobei
- die Gerätesteuerung eine Konfigurationsliste (38) enthält, in der die angeschlossenen Peripheriegeräte aufgeführt sind,
- ein Konfigurationsaktualisierer (54) über das Netzwerk (99) prüft, ob geänderte Konfigurationsdaten in einer Konfigurationsdatenbank (51) des Konfigurationsservers (50) vorliegen, und diese in die Konfigurationsliste (38) kopiert,
- ein Gerätestarter (32) für jedes in der Konfigurationsliste (38) aufgeführte Gerät einen Gerätesteuerprozeß (34) startet,
- der Gerätesteuerprozeß (34) für das von ihm angesteuerte Gerät (40) einen Gerätedienst über das Netzwerk (99) bei einem Verzeichnisserver (20) anmeldet (36),
- der Anwendungsserver (10) bei Vorliegen eines Ein-/Ausgabeauftrags über den Verzeichnisserver (20) einen passenden Gerätesteuerprozeß (34) bestimmt und diesen über das Netzwerk (99) aufruft, und dass die Gerätesteuerprozesse (34) durch Starten eines Hüllprogramms für eine standardisierte Geräteschnittstelle J/XFS erzeugt werden.

2. Verfahren nach Anspruch 1, wobei der Konfigurationsaktualisierer (54) das Datum der letzen Änderung der Konfigurationsliste (38) an den Server schickt und entweder eine vollständige neue Konfigurationsliste (38) oder einen Code zurückerhält, der anzeigt, daß die Konfigurationsliste (38) unverändert ist.

3. Verfahren nach Anspruch 1, bei dem in der Konfigurationsliste (38) jeder Eintrag mit einem Änderungsdatum versehen ist, dieses Änderungsdatum zusammen mit einer Identifikation des Eintrags an den Konfigurationsserver (50) geschickt wird und der Konfigurationsserver (50) entweder einen Konfigurationseintrag oder einen Code zurückschickt, welcher letzterer anzeigt, daß die Konfigurationsdaten unverändert sind.

4. Verfahren nach Anspruch 1, bei dem jeder Eintrag der Konfigurationsliste (38) an den Konfigurationsserver (50) geschickt wird und der Konfigurationsserver (50) entweder einen geänderten Eintrag oder einen Code zurückschickt, der anzeigt, daß der Eintrag unverändert ist.

5. Verfahren nach Anspruch 1, wobei der Konfigurationsaktualisierer (54) für jedes Gerät (40) Konfigurationsdaten von dem Konfigurationsserver (50) abruft, mit den in der Konfigurationsliste (38) enthaltenen vergleicht und bei Abweichungen in die Konfigurationsliste (38) schreibt.

6. Verfahren nach einem der vorigen Ansprüche, wobei eine Aufzählung der vorhandenen Geräte (40) über das Betriebssystem der Gerätesteuerung (30) erfolgt.

7. Verfahren nach einem der vorigen Ansprüche, wobei sowohl für den Konfigurationsserver (50) als auch den Verzeichnissserver (20) die JINI-Schnittstelle verwendet wird.

8. Verfahren nach einem der vorigen Ansprüche, wobei ein Eintrag in der Konfigurationsliste ein serialisiertes JAVA-Objekt ist.

## Claims

1. Method for operating a computer system with device controllers (30) for peripheral devices which are used by an application server (10) and with a configuration server (50), all of which are connected to one another by means of a network (99), where
- the device controller contains a configuration list (38) which shows the connected peripheral devices,
- a configuration updater (54) uses the network (99) to check whether amended configuration data are present in a configuration database (51) in the configuration server (50), and copies these data to the configuration list (38),
- a device starter (32) for each device shown in the configuration list (38) starts a device control process (34),
- the device control process (34) registers (36) a device service for the device (40) it actuates with a directory server (20) via the network (99),
- if an input/output order is present then the application server (10) uses the directory server (20) to determine a suitable device control process (34) and calls said process via the network (99), and the device control processes (34) are produced by starting a shell program for a standardized device interface J/XFS.

2. Method according to Claim 1, where the configuration updater (54) sends the data item from the last amendment in the configuration list (38) to the server and receives back either a complete new configuration list (38) or a code which indicates that the configuration list (38) is unaltered.

3. Method according to Claim 1, in which each entry in the configuration list (38) is provided with an amendment data item, this amendment data item is sent together with an identification of the entry to the configuration server (50), and the configuration server (50) sends back either a configuration entry or a code, the latter indicating that the configuration data are unaltered.

4. Method according to Claim 1, in which each entry in the configuration list (38) is sent to the configuration server (50), and the configuration server (50) sends back either an amended entry or a code which indicates that the entry is unaltered.

5. Method according to Claim 1, where the configuration updater (54) retrieves configuration data for each device (40) from the configuration server (50), compares them with the ones contained in the configuration list (38) and writes them to the configuration list (38) if there are discrepancies.

6. Method according to one of the preceding claims, where the devices (40) which are present are listed using the operating system of the device controller (30).

7. Method according to one of the preceding claims, where the JINI interface is used both for the configuration server (50) and for the directory server (20).

8. Method according to one of the preceding claims, where an entry in the configuration list is a serialized JAVA object.

## Revendications

1. Procédé d'exploitation d'un système informatique avec des commandes d'appareils (30) pour des appareils périphériques qui sont utilisés par un serveur d'application (10) ainsi qu'avec un serveur de configuration (50), lesquels sont tous reliés entre eux par l'intermédiaire d'un réseau (99), dans lequel
- la commande d'appareil contient une liste de configuration (38) dans laquelle sont énumérés les appareils périphériques raccordés,
- un actualisateur de configuration (54) vérifie par l'intermédiaire du réseau (99) s'il existe des données de configuration modifiées dans une base de données de configuration (51) du serveur de configuration (50) et il les copie le cas échéant dans la liste de configuration (38),
- un démarreur d'appareil (32) démarre un processus de commande d'appareil (34) pour chaque appareil mentionné dans la liste de configuration (38),
- pour l'appareil (40) qu'il commande, le processus de commande d'appareil (34) annonce (36) un service d'appareil via le réseau (99) auprès d'un serveur de répertoires (20),
- en présence d'une tâche d'entrée / sortie, le serveur d'application (10) détermine via le serveur de répertoires (20) un processus de commande d'appareil adapté (34) et il l'appelle par l'intermédiaire du réseau (99), et
- les processus de commande d'appareil (34) sont produits par le démarrage d'un programme enveloppant pour une interface d'appareil normalisée J/XFS.

2. Procédé selon la revendication 1, dans lequel l'actualisateur de configuration (54) envoie la date de la dernière modification de la liste de configuration (38) au serveur et il reçoit en retour soit un nouvelle liste de configuration complète (38) soit un code indiquant que la liste de configuration (38) est inchangée.

3. Procédé selon la revendication 1, dans lequel chaque entrée dans la liste de configuration (38) est munie d'une date de modification, cette date de modification est envoyée conjointement avec une identification de l'entrée au serveur de configuration (50) et le serveur de configuration (50) envoie en retour soit une entrée de configuration soit un code indiquant que les données de configuration sont inchangées.

4. Procédé selon la revendication 1, dans lequel chaque entrée de la liste de configuration (38) est envoyée au serveur de configuration (50) et le serveur de configuration (50) envoie en retour soit une entrée modifiée soit un code indiquant que l'entrée est inchangée.

5. Procédé selon la revendication 1, dans lequel l'actualisateur de configuration (54) demande des données de configuration au serveur de configuration (50) pour chaque appareil (40), les compare à celles contenues dans la liste de configuration (38) et, en cas de différence, les écrit dans la liste de configuration (38).

6. Procédé selon l'une des revendications précédentes, dans lequel il s'effectue une énumération des appareils présents (40) par l'intermédiaire du système d'exploitation de la commande d'appareil (30).

7. Procédé selon l'une des revendications précédentes, dans lequel l'interface JINI est utilisée aussi bien pour le serveur de configuration (50) que pour le serveur de répertoires (20).

8. Procédé selon l'une des revendications précédentes, dans lequel une entrée dans la liste de configuration est un objet JAVA sérialisé.
